# EUROPÄISCHE PATENTSCHRIFT

(11) **EP 1 059 995 B1**
(45) Veröffentlichungstag und Bekanntmachung des Hinweises auf die Patenterteilung: **02.07.2003**
(21) Anmeldenummer: 99907443.8
(22) Anmeldetag: 28.01.1999
(51) Int. Cl.: B01D 46/52, B01D 29/07, F02M 35/02

(54) **FILTERELEMENT MIT EINER EINSPANNVORRICHTUNG**
FILTER ELEMENT WITH FIXING DEVICE
ELEMENT FILTRANT ET SON DISPOSITIF DE FIXATION

(30) Priorität: 29.01.1998 DE 19803426
(43) Veröffentlichungstag der Anmeldung: 20.12.2000
(73) Patentinhaber: FILTERWERK MANN + HUMMEL GmbH, 71631 Ludwigsburg (DE)
(72) Erfinder: SCHNABEL, Werner, D-74747 Ravenstein (DE)
(74) Vertreter: Voth, Gerhard, Dipl.-Ing.
(86) Internationale Anmeldenummer: EP9900553
(87) Internationale Veröffentlichungsnummer: WO99038601

(56) Entgegenhaltungen:
- EP-A- 0 067 115
- DE-A- 19 534 254
- GB-A- 1 361 447
- US-A- 2 479 722
- US-A- 3 243 943
- US-A- 4 363 643
- US-A- 4 619 675

## Beschreibung

### Stand der Technik

Die Erfindung betrifft ein Filterelement mit einer Einspannvorrichtung für die mechanische Stabilisierung und Zentrierung der Filterbahnen nach der Gattung des Hauptanspruchs.

Bei einem aus der DE 195 34 254 A1 bekannten Filterelement, insbesondere für die Reinigung der Ansaugluft eines Verbrennungsmotors, besteht das Filterelement aus zick-zack-förmig gefalteten Bahnen aus Papier oder Vlies. Die gefalteten Bahnen bilden einen ebenen Ftachfilter, der außen an einem Rahmen befestigt ist. Zur Erhöhung der Stabilität des Filterelements sind über die Ebene des Filterelements verlaufende Stege zwischen den Rahmenwänden vorgesehen, die Schwertsegmente aufweisen, welche in die Zick-Zack-Falten eingreifen. Die US-A-4 619 675 und die US-A-4 363 643 zeigen ebenfalls Möglichkeiten einer Stabilisierung eines Filter elements mit gefalteten Bahnen auf.

Die Stabilisierung und Zentrierung des Filterelements ist insbesondere bei relativ großflächigen Filtern notwendig, da diese ev. einem großen Druck oder Druckschwingungen ausgesetzt sein können, die die Lage des Filterelements beeinflussen.

### Aufgabenstellung

Der Erfindung liegt die Aufgabe zugrunde, ein Filterelement der eingangs genannten Art so fortzubilden, dass ein einfacher und stabiler Aufbau bei unterschiedlichen Filterelementen möglich ist.

### Vorteile der Erfindung

Das erfindungsgemäße Filterelement ist in vorteilhafter Weise geeignet, ausgehend von der gattungsgemäßen Art, die gestellte Aufgabe mit den kennzeichnenden Merkmalen des Hauptanspruchs zu lösen. Dadurch, dass die Stabilisierung und Zentrierung mit einer Einspannvorrichtung aus zwei Teilen korrespondierender Kontur vorgenommen wird. die jeweils von der Rohluft- und der Reinluftseite des Filterelements an das Filterelement anfügbar sind, kann eine vom Rahmen des Filterelements unabhängige, jeweils an die Geometrie des Filterelements anpassbare Abstützung der Papier- oder Vliesbahnen vorgenommen werden. Die beiden Teile werden dabei unter Einspannung der Filterbahnen des Filterelements an vorgegebenen Stellen mittelbar aneinandergedrückt oder befestigt.

Im Einzelnen besteht die erfindungsgemäße Einspannvorrichtung in vorteilhafter Weise aus zwei über die Fläche des Filterelements verteilten Schwertern, die in Längsrichtung der Zick-Zack-Falten in diese einfügbar sind. In der Querrichtung sind jeweils auf der Rohluftseite und der Reinluftseite Verbindungsstege für die Schwerter vorhanden.

Um eine Zentrierung des Filterelements im Filtergehäuse auf einfache Weise zu ermöglichen, ist mindestens an einer Stelle, bevorzugt an zwei, der Einspannvorrichtung ein Gewindestutzen vorhanden mit dem die Einspannvorrichtung an der jeweils gegenüberliegenden Gehäusehälfte befestigt werden kann. In vorteilhafter Weise ist hier ein Gewinde in einem Kunststoffstutzen der Einspannvorrichtung angebracht, in das eine Schraube durch das Gehäuse eingedreht werden kann.

Die beiden Teile der Einspannvorrichtung können unter Einspannung der Bahnen des Filterelements mittels einer Schraubverbindung miteinander verbunden werden oder mittels einer Clippverbindung aneinandergedrückt werden.

### Zeichnung

Ein Ausführungsbeispiel eines erfindungsgemäßen Filterelements wird anhand der Zeichnungen erläutert. Es zeigen:
Figur 1 eine Draufsicht auf die Reinluftseite einer Flachfilterpatrone als Filterelement mit einer Einspannvorrichtung;
Figur 2 im unteren Teil eine Draufsicht auf einen Abschnitt der Einspannvorrichtung mit Schnittangaben, die im oberen Teil gezeigt sind und
Figur 3 einen Schnitt durch einen Bereich der Einspannvorrichtung mit einem Befestigungselement.

### Beschreibung des Ausführungsbeispiels

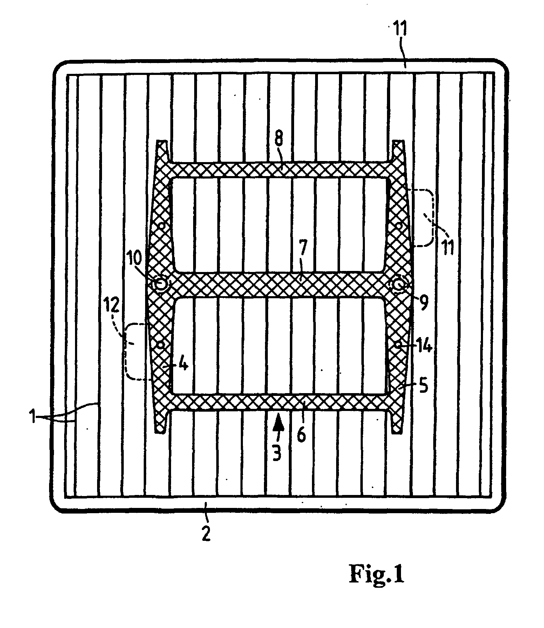

In Figur 1 ist eine Flachfilterpatrone mit zick-zack-förmig gefalteten Filterbahnen 1 aus Papier oder Vlies in der Draufsicht gezeigt. Die Filterbahnen 1 sind in einem Rahmen 2 eingespannt und im Inneren mit einer Einspannvorrichtung 3 stabilisiert, von der hier das eine Teil sichtbar ist. Die Flachfilterpatrone kann beispielsweise als Luftfilter für den Ansaugtrakt eines Verbrennungsmotors eingesetzt werden.

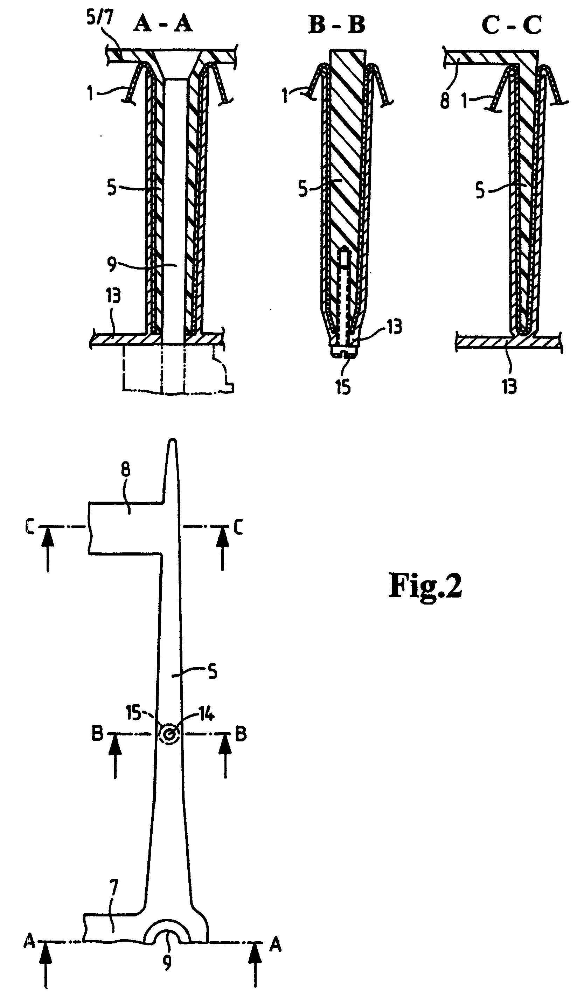

Die Einspannvorrichtung 3 besitzt hier zwei Schwerter 4 und 5, die mit hier nicht erkennbaren Rippen zur Stabilisierung in die gefalteten Filterbahnen 1 eingreifen. Die Schwerter 4 und 5 sind mittels Stegen 6, 7 und 8, die über die Filterbahnen geführt sind, aneinandergehalten. Auf der unteren, hier nicht sichtbaren Rohluftseite der Flachfilterpatrone ist ein korrespondierendes Teil der Einspannvorrichtung 3 angebracht, welches mit dem hier sichtbaren Teil verbindbar ist (vgl. Figur 2).

Weiterhin sind Durchgangslöcher 9 und 10 vorhanden, über die die beiden Teile der Einspannvorrichtung 3 miteinander verbindbar sind. Weiterhin gibtes eine Schraubverbindung zur Befestigung der Flachfilterpatrone mit dem Filtergehäuse zur Zentrierung des Filter elements im Filter gehaüse. Die Durchgangslöcher 9 oder 10 können auch im Eingangsbereich kegelförmig angeschnitten sein, damit eine weitere Zentrierung im Filtergehäuse möglich ist. An den Schwertern 4 und 5 sind im Bereich der Durchgangslöcher 9 und 10 Aushebelaschen 11 und 12 vorhanden, mit denen die Flachfilterpatrone transportiert werden kann.

In Figur 2 ist ein Abschnitt des Schwertes 5 sowie der Stege 7 und 8 im Detail gezeigt. Im Schnitt A-A ist zu erkennen, wie das Schwert , bzw. der Steg 7 in die Faltung der Filterbahn 1 von oben geführt ist; von unten ist das andere Teil der Einspannvorrichtung 3 zu erkennen, bei dem ein korrespondierendes Befestigungsteil 13 das Schwert 5 und die Filterbahn 1 einspannend umschließt. Im Inneren ist hier das Durchgangsloch 9 gebildet.

Im Schnitt B-B der Figur 2 ist hier ein Loch 14 zu erkennen, durch das eine Schraube 15 vom unteren Teil 13 der Einspannvorrichtung 3 durch die Filterbahn 1 in ein entsprechendes Gewindeloch des Schwertes 5 geführt ist. Die beiden Teile der Einspannvorrichtung 3 werden hier somit unter Einspannung der Filterbahn 1 miteinander befestigt, wobei das eingespannte Filterpapier für die notwendige Abdichtung sorgt.

Im Schnitt C-C der Figur 2 ist in Abweichung vom Schnitt B-B keine Befestigung der Teile der Schwerter vorgesehen, hier ist noch die Lage des Steges 8, der zum anderen Schwert 4 (vgl. Figur 1) geführt ist, zu erkennen.

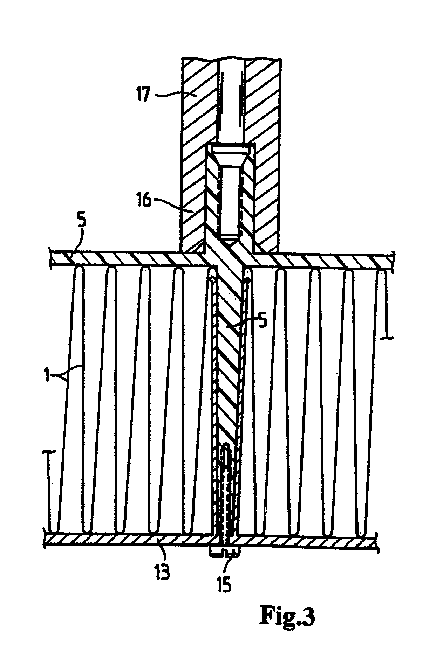

Die Darstellung nach Figur 3 entspricht im wesentlichen dem Schnitt B-B nach der Figur 2; hier ist jedoch noch ein Gewindestutzen 16 an das Schwert 5 aus Kunststoff angespritzt. An den Gewindestutzen 16 ist ein Abstandshalter 17 des Filtergehäuses anlegbar und darüber können die Flachfilterpatrone und das Filtergehäuse miteinander verschraubt werden.

### Bezugszeichenliste

- 1 =: Filterbahnen
- 2 =: Rahmen
- 3 =: Einspannvorrichtung
- 4,5 =: Schwerter
- 6,7,8 =: Stege
- 9,10 =: Durchgangslöcher
- 11,12 =: Aushebelaschen
- 13 =: unteres Teil der Einspannvorrichtung
- 14 =: Befestigungsloch
- 15 =: Schraube
- 16 =: Gewindestutzen
- 17 =: Abstandshalter

## Patentansprüche

1. Filterelement mit einer Einspannvorrichtung (3) für zick-zack-förmig gefaltete Filterbahnen (1), wobei die Einspannvorrichtung innerhalb der Faltungen Schwertsegmente (4, 5) zur an die Geometrie des Filterelementes anpassbaren Abstützung der Filterbahnen (1) enthält und die Einspannvorrichtung (3) aus zwei Teilen korrespondierender Kontur besteht, die jeweils zentral von der Rohluft- und der Reinluftseite des Filterelementes an die Filterbahnen (1) anfügbar sind und wobei die beiden Teile unter Einspannung der Filterbahnen (1) des Filterelementes an vorgegebenen Stellen aneinanderdrückbar oder -befestigbar sind und wobei wenigstens eines der beiden Teile mit einem gegenüber liegenden Filtergehaüseteil fest verbind bar ist, um eine Zentrierung im Filtergenäuse zu gewährleisten.

2. Filterelement nach Anspruch 1, **dadurch gekennzeichnet, dass**
- die Einspannvorrichtung (3) aus zwei zentral über die Fläche des Filterelements verteilten Schwertern (4,5) besteht, die in Längsrichtung der Zick-Zack-Falten der Filterbahnen (1) in diese einfügbar sind und in Querrichtung jeweils auf der Rohluftseite und der Reinluftseite verbindende Stege (6,7,8) für die Schwerter aufweist.

3. Filterelement nach Anspruch 1 oder 2, **dadurch gekennzeichnet, dass**
- die Teile der Einspannvorrichtung (3) über zwei Durchgangslöcher (9,10) miteinander verbindbar sind.

4. Filterelement nach einem der vorhergehenden Ansprüche, **dadurch gekennzeichnet, dass**
- mindestens ein Teil der Einspannvorrichtung (3) zur Zentrierung mittels eines Gewindestutzens (16) an der jeweils gegenüberliegenden Filtergehäusehälfte befestigbar ist.

5. Filterelement nach einem der vorhergehenden Ansprüche, **dadurch gekennzeichnet, dass**
- die beiden Teile der Einspannvorrichtung (3) mittels einer Schraubverbindung (15) miteinander verbindbar sind.

6. Filterelement nach einem der Ansprüche 1 bis 4, **dadurch gekennzeichnet, dass**
- die beiden Teile der Einspannvorrichtung (3) mittels einer Clippverbindung aneinander drückbar sind.

## Claims

1. Filter element, having a clamping device (3) for filter strips (1) which are folded in a zigzag-like manner, wherein the clamping device includes tongue-like segments (4,5) inwardly of the foldings to support the filter strips (1), which support is adaptable to the geometry of the filter element, and the clamping device (3) comprises two parts of corresponding configurations which can be added to the filter strips (1) centrally of the unfiltered air side and the filtered air side respectively of the filter element, and wherein the two parts can be pressed against each other or are mountable on each other at prescribed locations when the filter strips (1) of the filter element are clamped in position, and wherein at least one of the two parts is securedly connectable to an oppositely situated filter housing part in order to ensure centering in the filter housing.

2. Filter element according to claim 1, **characterised in that** the
- the clamping device (3) comprises two tongues (4,5), which are distributed centrally over the surface of the filter element and, when viewed with respect to the longitudinal direction of the zigzag-like folds of the filter strips (1), are insertable into the latter, and the clamping device has webs (6,7,8) for the tongues, which webs connect on the unfiltered air side and on the filtered air side respectively when viewed with respect to the transverse direction.

3. Filter element according to claim 1 or 2, **characterised in that**
- the parts of the clamping device (3) are interconnectable via two through-bores (9,10).

4. Filter element according to one of the preceding claims, **characterised in that**
- at least one part of the clamping device (3) is mountable on the respective oppositely situated filter housing half by means of a threaded connector (16) for centring purposes.

5. Filter element according to one of the preceding claims, **characterised in that**
- the two parts of the clamping device (3) are interconnectable by means of a screw connection (15).

6. Filter element according to one of claims 1 to 4, **characterised in that**
- the two parts of the clamping device (3) can be pressed against each other by means of a clip-in connection.

## Revendications

1. Elément de filtre comportant un dispositif de fixation (3) pour une nappe de filtre (1) pliée en zigzag,
dans lequel
le dispositif de fixation comporte, à l'intérieur des plis, des segments en forme de couteaux (4, 5) pour s'appuyer de manière adaptée à la géométrie de l'élément de filtre contre les nappes de filtre (1), et
le dispositif de fixation (3) se compose de deux parties de contour correspondant réunies chaque fois de manière centrale par le côté de l'air non filtré et le côté de l'air filtré de l'élément de filtre aux nappes de filtre (1), les deux parties sont appliquées et/ou fixées par serrage des nappes de filtre (1) de l'élément de filtre en des endroits prédéterminés, et
au moins l'une des deux parties est reliée de manière solidaire à la partie de boîtier de filtre en regard pour assurer le centrage dans le boîtier de filtre.

2. Elément de filtre selon la revendication 1,
**caractérisé en ce que**
le dispositif de fixation (3) se compose de deux couteaux (4, 5) répartis de manière centrale par rapport à la surface de l'élément de filtre et qui sont introduits dans la direction longitudinale des plis en zigzag des nappes de filtre (1) et dans la direction transversale il y a des entretoises (6, 7, 8) reliant les couteaux à la fois sur le côté de l'air non filtré et sur le côté de l'air filtré.

3. Elément de filtre selon les revendications 1 ou 2,
**caractérisé en ce que**
les parties du dispositif de fixation (3) sont reliées à travers des orifices traversants (9, 10).

4. Elément de filtre selon l'une des revendications précédentes,
**caractérisé en ce qu'**
au moins une partie du dispositif de fixation (3) se fixe pour le centrage à l'aide d'un embout fileté (16) à la moitié du boîtier de filtre situé en regard.

5. Elément de filtre selon l'une des revendications précédentes,
**caractérisé en ce que**
les deux parties du dispositif de fixation (3) sont reliées l'une à l'autre par une liaison vissée (15).

6. Elément de filtre selon les revendications 1 à 4,
**caractérisé en ce que**
les deux parties du dispositif de fixation (3) sont pressées l'une contre l'autre par une liaison de clipsage.
